# EUROPÄISCHE PATENTSCHRIFT

(11) **EP 3 426 955 B1**
(45) Veröffentlichungstag und Bekanntmachung des Hinweises auf die Patenterteilung: **09.10.2019**
(21) Anmeldenummer: 17709959.5
(22) Anmeldetag: 09.03.2017
(51) Int. Cl.: F16K 5/04

(54) **KUNSTSTOFFECKVENTIL**
PLASTIC ANGLE VALVE
ROBINET D'ÉQUERRE EN PLASTIQUE

(30) Priorität: 09.03.2016 DE 102016104320
(43) Veröffentlichungstag der Anmeldung: 16.01.2019
(73) Patentinhaber: TECE GmbH, 48282 Emsdetten (DE)
(72) Erfinder: SEIDEL, Wolfgang, 32457 Porta Westfalica (DE)
(74) Vertreter: Lippert Stachow Patentanwälte Rechtsanwälte
(86) Internationale Anmeldenummer: PCT/EP2017/055574
(87) Internationale Veröffentlichungsnummer: WO 2017/153534

(56) Entgegenhaltungen:
- EP-A1- 0 116 770
- EP-A1- 0 581 637
- US-A- 3 355 220
- US-A- 3 967 811

## Beschreibung

Die Erfindung betrifft ein Kunststoffeckventil zur Absperrung oder Regelung des Durchflusses von Flüssigkeiten, aufweisend einen Ventilhauptkörper mit einem Eingangskanal und einem Ausgangskanal, die jeweils in eine innere Aufnahme mit einer darin um eine Drehachse senkrecht oder etwa senkrecht zum Ausgangskanal drehbar gelagerten und einer Dichtung gegen den Ventilhauptkörper abgedichteten Absperrung einmünden, wobei die beiden Kanäle in einem rechtem oder zumindest etwa rechtem Winkel zueinander angeordnet sind und wobei die Absperrung in einer Offenposition die beiden Kanäle miteinander verbindet und in einer Sperrposition die beiden Kanäle voneinander trennt.

Ein solches Ventil ist z.B. aus EP0116770A1 oder US3967811A bekannt.

Derartige Kunststoffeckventile haben gegenüber anderen üblichen Eckventilen aus Metall den Vorteil, dass sie leichter herstellbar sind, da sie beispielsweise nicht nachgearbeitet werden müssen. Nachteilig hingegen ist, dass die Abdichtung der Absperrung gegen den Ventilhauptkörper insbesondere in der Absperrposition problematisch ist. Hierbei kann die Absperrkörper zwar in beiden Positionen beispielsweise mittels O-Ringen nach außen hin dichtend gegen den Ventilhauptkörper anliegen. Ein Problem ist jedoch die Abdichtung der Absperrung in der Absperrposition nach Innen zu dem Ausgangskanal hin, so dass trotz Dichtungsversuche von Kunststoff gegen Kunststoff keine Flüssigkeit dichte Abdichtung, sondern ein leichtes tropfenartiges Abfließen der Flüssigkeit in den Ausgangskanal hinein zu beobachten ist.

Eine Aufgabe der Erfindung ist, ein gattungsgemäßes Eckventil mit zumindest verbesserter Abdichtung nach Innen bereitzustellen. Zudem soll das Eckventil einfacher aufgebaut, herstellbar und montierbar sein.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die Dichtung eine radial nach Außen vorstehende elastomere Erhebung aufweist, die in der Sperrposition den Öffnungsrand des in die Aufnahme einmündenden Ausgangskanals bezüglich der Öffnungsachse des Öffnungsrandes vollumfänglich umgebend dichtend gegen den Ventilhauptköper anliegt und dass die elastomere Erhebung bei der Drehung der Absperrung zwischen der Offenposition und der Sperrposition radial nach Innen beabstandet zu dem Öffnungsrand des Ausgangskanals angeordnet über denselben führbar ist.

Der Einsatz der radial nach außen weisenden Erhebung aus einem Elastomer ermöglicht eine wasserdichte Abdichtung des Ausgangskanals. Es wird über die Werkstoffpaarung Kunststoff, wie Duroplast oder Thermoplast, mit Elastomer eine wasserdichte Abdichtung erzielt. Erfindungsgemäß ist zudem die Erhebung bei der Drehung der Absperrung zwischen der Offenposition und der Sperrposition radial nach Innen beabstandet zu dem Öffnungsrand des Ausgangskanals angeordnet. Dieses ist im Stand der Technik nicht möglich, da hier das Elastomer an dem scharfkantigen Übergang von Aufnahme und Einmündung des Ausgangskanals in die Aufnahme sehr leicht beschädigt und damit unbrauchbar ist. Dank dieser Maßnahme kann die Erhebung mit der Verdrehung der Absperrung nicht in Kontakt mit dem Öffnungsrand kommen. Sie kann frei über den Öffnungsrand geführt werden. Neben der dadurch stark verringerten mechanischen Belastung der Erhebung bei der Verdrehung der Absperrung kann hierdurch auch die Reibung und damit das notwendige Drehmoment bedienungsfreundlich vermindert werden.

Die elastomere Erhebung kann zur Verminderung ihrer mechanischen Belastung so ausgebildet sein, dass lediglich ihr in Drehrichtung aus der Offenposition in die Schließposition hintere und sich axial über die Absenkung erstreckende Abschnitt zum Verschließen und zum Öffnen des Kunststoffeckventils über die Absenkung verschoben wird.

Bis auf die Dichtung können alle anderen Bauteile und/oder Bereiche des Kunststoffeckventils aus einem üblichen Kunststoff, allgemein aus einem Thermoplast oder Duroplast, gefertigt sein. Auch hinsichtlich einer verminderten insbesondere Gleitreibung zwischen Elastomer und Kunststoffelastomeren und wegen einer leichteren Verformung der Erhebung zur Abdichtung kann dieselbe linienartig ausgebildet sein. Die elastomere Erhebung kann ringartig ausgebildet sein. Hierbei kann sie ein rundes Profil, ein eckiges Profil oder ein Profil mit runden und eckigen Profilabschnitten aufweisen. Sie kann ein O-Ring sein.

Der Ventilhauptkörper kann einen Eingangskanal und Ausgangskanal verbindenden in seinem Verlauf abgewinkelten Flüssigkeitskanal aufweisen. Die innere Aufnahme für die Absperrung wie üblich im Bereich der Abwinkelung des Flüssigkeitskanals angeordnet sein. Der Flüssigkeitskanal kann in der Sperrposition unterbrochen und in der Offenposition über einen in der Absperrung eingebrachten winkligen Kanalabschnitt überbrückt werden.

In einer vorteilhaft konstruktiv einfachen Ausführungsform des Eckventils kann die innere Aufnahme im Bereich der Einmündung des Ausgangskanals in die Aufnahme eine bezüglich der Drehachse radial nach Außen gehende Absenkung aufweisen. Insbesondere kann der Ausgangskanal vorzugsweise vollständig, d.h. über seinen gesamten Öffnungsquerschnitt seiner Einmündung, in den Grund oder Boden der Absenkung einmünden. Vorteil wegen eines leichteren Abgleitens der elastomeren Erhebung im Bereich der Absenkung können die die Absenkung seitlich begrenzenden Seitenflächen zur Öffnungsachse des Öffnungsrandes des Austrittkanals geneigt angeordnet sein. Seitlich bedeutet hier in zur Drehachse axialer und/oder umfänglicher Richtung. Bezüglich der Öffnungsachse einander gegenüber liegende Seitenflächen können in Durchflussrichtung konisch oder keilartig zusammenlaufen ausgebildet sein. Die Seitenflächen können unter Vermeidung von möglicherweise abrasiv wirkenden Kanten oder Sprüngen an den Übergängen zu dem Boden und/oder den Dichtungsflächen hin ein vorzugsweise durchgehend gerundetes Profil, insbesondere S-förmig gerundetes Querprofil aufweisen. Insbesondere kann vorgesehen sein, dass die Seitenflächen keine Hintergriffigkeit begrenzen. Damit kann der Ventilhauptkörper unaufwändig gespritzt und entformt werden.

Die Absenkung kann randseitig von radial nach Innen weisenden Dichtungsflächen definiert werden, die zur dichtenden Anlage der elastomeren Erhebung dienen. Diese Dichtungsflächen können um die Tiefe der Absenkung von der Einmündung des Ausgangskanals in den Boden der Absenkung radial entfernt zu der Einmündung angeordnet sein. Das Elastomer kann somit bei den Wechseln zwischen Offenposition und Absperrposition und damit bei dem Überstreichen der Einmündung des Ausgangskanals radial beabstandet zu der Einmündung gehalten werden. Konstruktiv einfach kann über die Tiefe der Absenkung die radiale Beabstandung der an den Dichtungsflächen anliegende elastomeren Erhebung beim Überstreichen der Einmündung des Ausgangskanals eingestellt werden.

Vorzugsweise ist die radiale Höhe der elastomeren Erhebung kleiner als die radiale Tiefe der Absenkung. Vorteilhaft kompakt kann die radiale Höhe geringfügig kleiner, beispielsweise um ein Zehntel Millimeter kleiner als Tiefe der Absenkung ausgebildet sein. Insbesondere kann die radiale Höhe der elastomeren Erhebung so bemessen ist, dass die Erhebung bei Abdichtung unter einer Vorspannung von 5% bis 50%, vorzugsweise von 15% bis 30% und idealerweise von 20% bis 30% an dem Ventilhauptkörper, insbesondere an den zugeordneten Dichtungsflächen anliegt. Hierbei beziehen sich die Prozentangaben auf die radiale Höhe der Erhebung im unbelasteten Zustand als 100%.

In einer vorteilhaften Ausführungsform des Eckventils kann die Erhebung rippenartig ausgebildet sein. Insbesondere kann sie zumindest eine Dichtlippe aufweisen und/oder als dieselbe ausgebildet sein. Die zumindest eine Dichtlippe kann radial nach außen weisend angeordnet sein. Die Absperrung kann mit der Dichtungslippe bezüglich der Drehachse radial nach außen gegen die Dichtungsflächen anliegen. Die Dichtlippe kann in Sperrposition umfänglich, insbesondere vollumfänglich um die Absenkung angeordnet sein.

Dichtungstechnisch günstig kann der Ausgangskanal beabstandet zu den Seitenflächen in den Boden der Absenkung einmünden. Diese Einmündung kann mittig des Bodens erfolgen.

In einer weiteren konstruktiv einfachen Ausführungsform des Kunststoffeckventils die elastomere Erhebung mindestens drei, vorzugsweise mindestens vier Dichtungsabschnitte aufweisen. Diese können endseitig aneinander anschließen. Sie können jeweils in einem gleichen Winkel aneinander anschließend angeordnet sein. Sie können die Absenkung in der Sperrposition umfänglich, insbesondere vollumfänglich umschließen.

Insbesondere können die vier endseitig aneinander anschließenden Dichtungsabschnitte paarweise senkrecht zur oder in Drehrichtung des Sperrkörpers angeordnet sein. Sie können somit paarweise zur Drehachse axial bzw. umfänglich zu derselben angeordnet sein. Vorteilhaft kann somit vorgesehen sein, dass zum Verschließen und zum Öffnen des Kunststoffeckventils lediglich der in Drehrichtung hintere axiale Dichtungsabschnitt über die Absenkung verdreht wird. Dies hat zur Folge, dass, wie im Einzelnen noch in der Figurenbeschreibung gezeigt, dieser in Drehrichtung hintere axiale Dichtungsabschnitte infolge des statischen Druckes der Flüssigkeit in dem Eingangskanal zusätzlich gegen die Wandung der Aufnahme gepresst wird und somit die Dichtungswirkung verstärkt.

Günstig u.a. wegen einer leichteren Entformbarkeit der Absperrung kann die Dichtung zwei in Richtung der Drehachse angeordnete erste Dichtungsabschnitte und zwei senkrecht der Drehachse angeordnete zweite Dichtungsabschnitte aufweisen. Die Abschnitte können in einer alternierenden Abfolge aneinander anschließen. Sie können bezüglich einer Zylindergeometrie insbesondere in einem Winkel von 90° aneinander anschließend angeordnet sein.

Insbesondere kann die elastomere Erhebung als erste Dichtungsabschnitte zwei axiale in Umfangsrichtung parallel beabstandete Dichtlippen aufweisen, die in der Sperrfunktion in Umfangsrichtung beidseitig der Absenkung dichtend an den Dichtungsflächen anliegend angeordnet sind. Die elastomere Erhebung kann als zweite Dichtungsabschnitte zwei umfängliche axial parallel beabstandete Dichtlippen oder zwei umfängliche axial parallel beabstandete O-Ringe aufweist. Die zweiten Dichtungsabschnitte können in der Sperrfunktion in axialer Richtung beidseitig der Absenkung dichtend an den Dichtungsflächen anliegend angeordnet sind.

Hinsicht der Herstellung und der Kosten hierzu günstig, kann Kunststoffeckventil so weitergebildet sein, dass die Absperrung zur Erstellung der Dichtung mit dem Elastomer umspritzt ausgebildet ist.

In einer vorteilhaft einfachen Ausführungsform des Eckventils kann die Absperrung einen bezüglich seiner Grundform zylindrischen Absperrkörper mit einem die Erhebung aufweisenden axialen Abschnitt aufweisen. Der axiale Abschnitt kann mit dem Elastomer umspritzt oder vollständig aus dem Elastomer gefertigt ausgebildet sein.

Das Elastomer kann beispielsweise mittels Klebung und/oder mittels radialer Vorspannung fest mit dem Absperrkörper verbunden sein. Insbesondere kann das Elastomer stoffschlüssig mit dem Absperrkörper verbunden angeordnet sein. Vorteilhaft einfach kann das Elastomer mittels des Zwei-Komponenten-Spitzgussverfahren auf den axialen Abschnitt aufgebracht sein.

Insbesondere kann der Absperrkörper in dem axialen Abschnitt einen Kern aus Kunststoff, insbesondere aus Duroplast oder Thermoplast, aufweisen, der mit einer Schicht aus dem Elastomer ummantelt ist, wobei sich die elastomere Erhebung von der Schicht radial nach außen weg erstreckt. Durch die Ummantelung kann ein fester Sitz der Schicht auf dem Kern erzielt werden.

In einer weiteren Herstellung und Montage vereinfachenden n Ausführungsform des Kunststoffeckventils ist vorgesehen, dass es lediglich zwei Bauteilen, das heißt den Ventilhauptkörper und die Absperrung, aufweist.

Ventilhauptkörper und vorzugsweise auch Absperrung können jeweils einstückig ausgebildet sein. Ventilhauptkörper und vorzugsweise auch Absperrung können jeweils als Spritzgussbauteil ausgebildet sein.

Die Absperrung in einer zur Drehachse parallelen Montagerichtung seitlich in die innere Aufnahme eingebracht angeordnet sein. Günstig zur Herstellung und Montage des Kunststoffeckventils kann vorgesehen sein, dass die in den Ventilhauptkörper eingebrachte Absenkung zur leichteren Entformbarkeit des Ventilhauptkörpers seitlich gegen Montagerichtung geöffnet ausgebildet ist. Somit kann die Absenkung ohne zusätzlichen Kern, wie Faltkern, mit dem Spritzvorgang in die umfängliche Oberfläche der Absperrung eingebracht werden.

Insbesondere kann die Absenkung ein U-förmiges Öffnungsprofil mit zwei vorzugsweise gleichen Schenkeln parallel zur Drehachse und einer die Schenkel verbindenden Grundseite senkrecht zur Drehachse aufweisen. Dies hat zur Folge, dass die Dichtungsflächen, die an den Schenkel bzw. an der Grundseite entsprechend der Tiefe der Absenkung radial erhöht zu dem Boden der Absenkung angeordnet sind, während die an der geöffneten Seite des U-Profils angrenzende Dichtungsfläche in einer Höhe zu dem Boden angeordnet sein kann.

Diese Maßnahme kann zur Folge haben, dass bei der oben beschriebenen Ausführungsform des Kunststoffeckventils mit zwei axialen Dichtlippen und zwei umfänglichen Dichtlippen die zugeordneten Dichtungsflächen auf einem unterschiedlichen radialen Niveau angeordnet sind. Den zu den Schenkel benachbarten Dichtungsflächen ist jeweils eine zur Drehrichtung axiale Dichtlippe, während die zu der Grundseite und die zu geöffneten Seite benachbarten Dichtungsflächen jeweils eine umfänglichen Dichtlippe zugeordnet sind. Hierbei kann trotz der offenen Seite beispielsweise durch Anpassung der Tiefe der Absenkung vermieden werden, dass die axialen Dichtungslippen zu der freien Seite hin den Öffnungsrand schädlich berühren. Die beiden umfänglichen Dichtlippen können entsprechend der ihnen jeweils zugeordneten Dichtungsfläche an der freien Seite bzw. an der Grundseite eine hieran angepasste radiale Dicke aufweisen. Damit kann in der Sperrposition die radiale Dicke der in Montagerichtung vorderen umfänglichen Dichtlippe etwa um die Tiefe der Absenkung größer als die der in Montagerichtung hinteren umfänglichen Dichtlippe sein. Infolge dessen wird auf die vordere Dichtlippe ein größer statischer Flüssigkeitsdruck als auf die hintere Dichtlippe ausgeübt, wodurch die Absperrung gegen Montagerichtung beschleunigt und somit leichter demontiert werden kann. Zur Vermeidung einer axialen Verschiebung gegen Montagerichtung kann daher vorgesehen sein, dass die Absperrung in Montagerichtung hinten beispielsweise mittels einer Rastverbindung an dem Ventilhauptkörper axial verschiebungsfest an dem Ventilhauptkörper festgelegt ist.

Zu seiner leichteren Entformbarkeit der Absperrung aus dem Spritzgusswerkzeug kann der Absperrkörper in Richtung der Drehachse, insbesondere in Montagerichtung leicht konisch zulaufend ausgebildet sein.

Insbesondere kann die Absperrung bezüglich der Drehachse einen als Betätigungsende ausgebildeten ersten Endbereich aufweisen. Der erste Endbereich kann übliche Betätigungsmittel, wie Handhebel oder Anschluss für Schraubenschlüssel oder dergleichen aufweisen. Hierbei kann die Drehung entsprechend den Endpositionen Absperrposition und Offenposition insbesondere Anschlag begrenzt sein. Die Absperrung kann bezüglich der Drehachse einen als Halteende ausgebildeten zweiten Endbereich zur Sicherung der Absperrung gegen ein Herausdrücken gegen Montagerichtung aufweisen. Diese Sicherung kann durch Festlegung des zweiten Endbereichs an der Aufnahme beispielsweise mittels einer Rastverbindung erfolgen. Bezüglich der Montagerichtung können der erste Endbereich als vorderer Endbereich und der zweite Endbereich als hinterer Endbereich ausgebildet sein.

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
Figuren 1a und 1b jeweils eine perspektivische Ansicht einer ersten Ausführung eines Eckventils mit Ventilhauptkörper und Absperrung in einer Offenposition,
Figuren 2 und 2a eine Seitenansicht bzw. eine Längsschnittansicht des Eckventils gemäß dem Schnittverlauf IIa-IIa in Figur 2,
Figuren 3 und 3a eine weitere Seitenansicht bzw. eine Längsschnittansicht des Eckventils gemäß dem Schnittverlauf IIIa-IIIa in Figur 3,2,
Figuren 4a und 4b jeweils eine Ausschnittvergrößerung IV gemäß Figur 2, in einer Offenposition bzw. in einer Absperrposition,
Fig.5 eine 2. Längsschnittansicht gemäß dem Schnittverlauf V-V in Figur 2,
Fig. 6 eine perspektivische Aufsicht auf den Ventilhauptkörper mit geöffneter Aufnahme für die Absperrung,
Fig.7 eine Längsschnittansicht des Ventilhauptkörpers gemäß Figur 6,
Fig.8a und 8b jeweils perspektivische Aufsicht auf die Absperrung
Fig. 9 eine perspektivische Aufsicht auf eine zweite Ausführungsform des Eckventils und
Fig.10 eine Längsschnittansicht des Eckventils gemäß Figur 9.

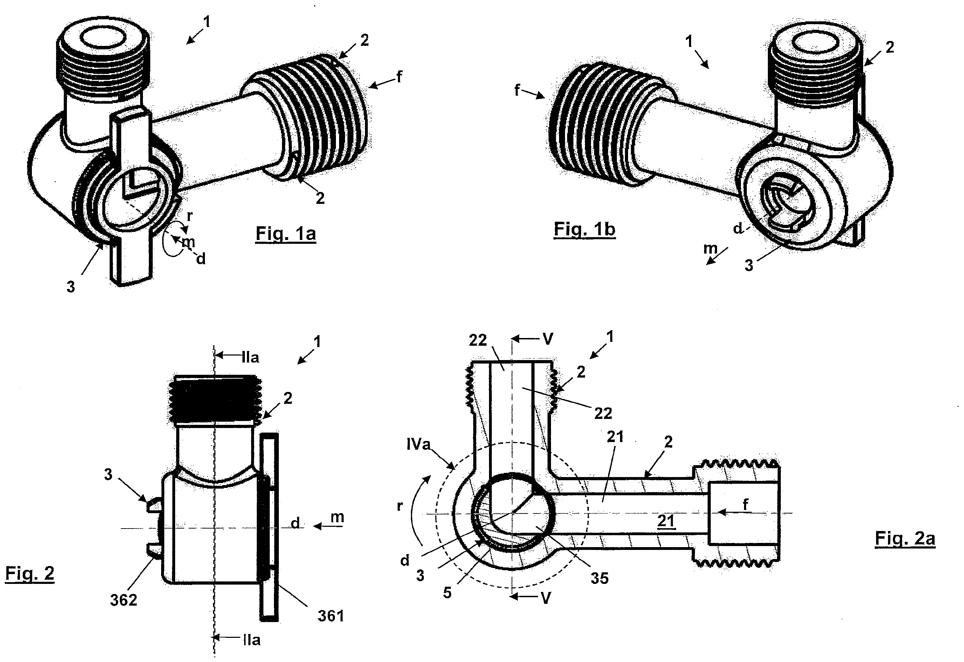

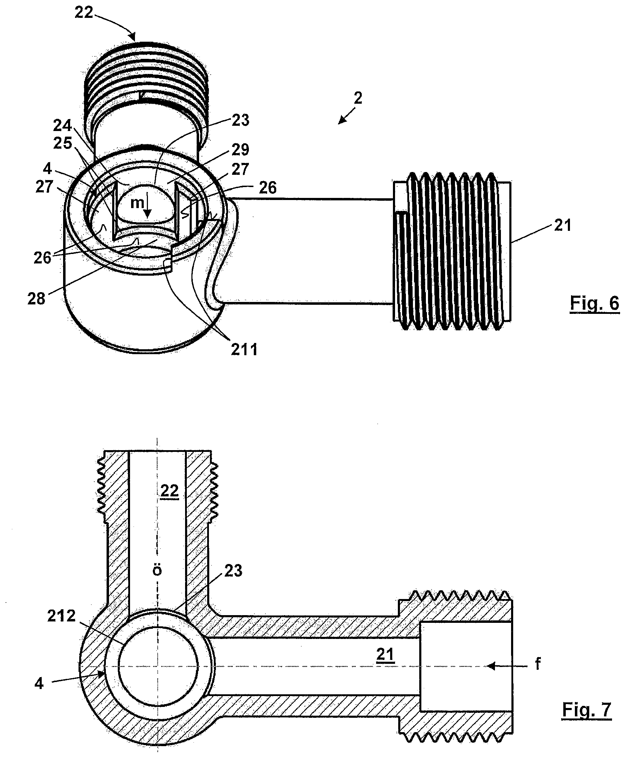

In den Figuren 1 bis 11 werden in verschiedenen Ansichten und Schnitten zwei Ausführungsformen eines Kunststoffeckventils 1 mit einem Ventilhauptkörper 2 und einer Absperrung 3 zur Absperrung oder Regelung des Durchflusses von hier nicht dargestellten Flüssigkeiten sowie Einzeldarstellungen von Ventilhauptkörper 2 und Absperrung 3 gezeigt. Das Kunststoffeckventils 1 ist somit hier aus lediglich aus zwei hier zudem jeweils einstückigen Bauteilen, das heißt dem Ventilhauptkörper 2 und der Absperrung 3, aufgebaut, wobei diese jeweils in den Figuren 6 und 7 bzw. 8a-8b gezeigt sind. Ventilhauptkörper 2 und Absperrung 3 sind Spritzgussbauteile.

Der Ventilhauptkörper 2 weist einen Eingangskanal 21 und einen Ausgangskanal 22 auf, wobei diese jeweils in eine in dem Ventilhauptkörper 2 vorgesehen innere Aufnahme 4 einmünden. Die Absperrung 3 weist einen im Wesentlichen zylindrischen Absperrkörper 31 mit einem zylindrischen hier mittleren Abschnitt 32 auf, der mittels eines 2-Komponen-Spritzgussverfahren mit einer elastomeren Schicht 34 ummantelt ist, wobei die elastomere Erhebungen 51 von dieser Schicht 34 ausgehen. Der Absperrkörper 31 ist aus einem Duroplast oder Thermoplast gefertigt. Er weist somit in dem axialen Abschnitt 32 quasi einen Kern aus Duroplast oder Thermoplast, auf, der mit der elastomeren Schicht 34 ummantelt ist

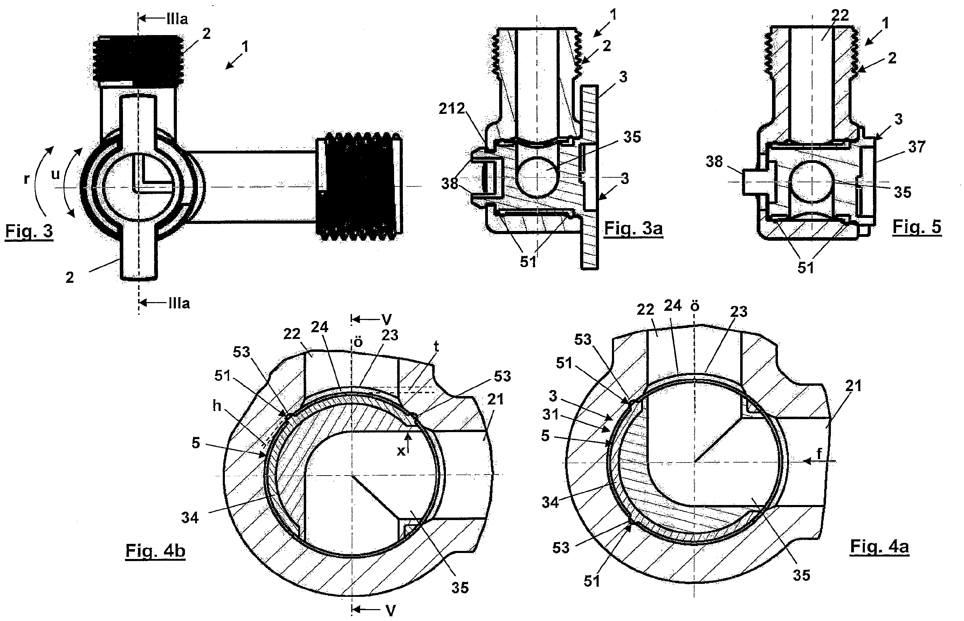

In der Aufnahme 4 ist die Absperrung 3 um eine Drehachse d senkrecht zum Ausgangskanal 22 drehbar gelagert, wobei die Absperrung 3 über eine Dichtung 5 nach außen gegen den Ventilhauptkörper 2 abgedichtet ist. Die beiden Kanäle 21, 22 sind in einem rechtem Winkel zueinander angeordnet. Die Absperrung 3 weist in seinem Verlauf um 90° abgewinkelten Kanalabschnitt 35 auf, über den sie in einer in den Figuren 1, 2, 2a, 3, 3a, 4, 10 und 11 gezeigten Offenposition die beiden Kanäle 21, 22 miteinander verbindet. Die beiden Kanäle 21, 22 werden in einer in den Figuren 4a und 5 Sperrposition voneinander getrennt.

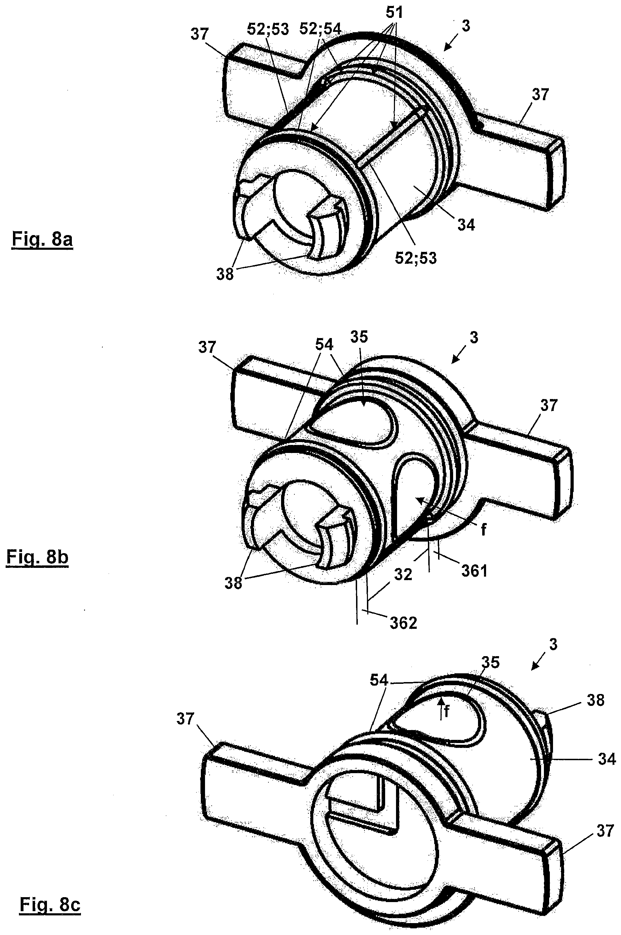

Erfindungsgemäß ist vorgesehen, dass die Dichtung 5 eine radial nach Außen vorstehende elastomere Erhebung 51 (Figur 8a) aufweist, die hier von der elastomeren Schicht 34 radial nach Außen erstreckt. Die elastomere Erhebung 51 liegt, in der Sperrposition den Öffnungsrand 23 des in die Aufnahme 4 einmündenden Ausgangskanals 22, bezüglich der Öffnungsachse ö des Öffnungsrandes 23 vollumfänglich umgebend, innenseitig der Aufnahme 4 dichtend radial nach außen gegen den Ventilhauptköper 2 an.

Die Erhebung 51 ist, wie insbesondere den Figuren 4a und 4b entnehmbar, bei der Drehung der Absperrung 3 zwischen der Offenposition und der Sperrposition radial nach Innen beabstandet zu dem Öffnungsrand 23 des Ausgangskanals 22 angeordnet über denselben führbar angeordnet. Hier geben Figur 4a eine Ausschnittvergrößerung IVa gemäß Figur 2a und Figur 4b eine gleiche Ausschnittsvergrößerung, jedoch in Figur 4b in der Absperrposition mit der gegenüber der Darstellung in Figur 4a um 90° verdrehten Absperrung 3. Zur Beabstandung der Erhebung 51 von dem Öffnungsrand 23 ist eine radial nach Außen gehende Absenkung 24 in die Wandung der Aufnahme 2 vorgesehen, in die der Ausgangskanal 22 gegen vorgesehener Durchflussrichtung f bodenseitig mittig einmündet. Dies ist Figur 8 entnehmbar. Die Einmündung des Ausgangskanal 22 in die Absenkung 24 hinein erstreckt sich über mit seinem gesamten Öffnungsquerschnitt. Dies ist Figur 8a entnehmbar.

Die Erhebung 51 der Dichtung 5 ist linienartig ausgebildet. Sie weist hier vier endseitig aneinander anschließenden Dichtungsabschnitte 52 auf, die paarweise senkrecht zur oder in Drehrichtung d des Sperrkörpers 34 angeordnet sind. Die Dichtungsabschnitte 52 sind hier als Dichtlippen und zwar als zwei axiale Dichtlippen 53 und zwei umfängliche Dichtlippen 54 ausgebildet. Diese schließen in einer auf die Öffnungsachse ö des Öffnungsrandes 23 bezogene Umfangsrichtung u in einer alternierenden Abfolge aneinander an, wodurch sie ein in Hinsicht auf Zylinderkoordinaten rechtwinkliges Viereck mit dem Öffnungsrand 23 in der Mitte desselben umschließen.

Wie Figuren 4a und 4b entnehmbar, wird bei dem Übergang zwischen den Positionen der Absperrung 3 jeweils die in Drehrichtung r von der Offenposition in die Sperrposition hintere axiale Dichtlippe 53 beabstandet zu der Absenkung 24 über dieselbe geführt.

Zur verschleißarmen Drehverschiebung hier der hinteren axialen Dichtlippe 53 weist die Absenkung 24 in Durchflussrichtung konisch zulaufenden Seitenflächen 25 (siehe Figur 6) auf. Die Absenkung 24 wird randseitig, d.h. hier bezüglich der Drehachse d umfänglich und axial, von radial nach Innen weisenden Dichtungsflächen 26 definiert, gegen die die elastomeren Dichtlippen 53, 54 in der Dichtungsposition dichtend anliegen. Der Ausgangskanal 22 mündet beabstandet zu den Seitenflächen 25 und zwar bezüglich einer geometrischen Mitte der Absenkung 24 mittig in dieselbe ein.

Die in die Absenkung hineinragende radiale Höhe h der elastomeren Erhebung 51 bzw. hier der Dichtlippen 53, 54 ist kleiner, hier um einige Zentelmillimeter kleiner als die radiale Tiefe t der Absenkung 24 (siehe Figur 4b). Die jeweilige radiale Höhe h der elastomeren Dichtlippen 53, 54 ist hier so bemessen, dass die Dichtungslippen 53, 54 in der Sperrposition unter einer auf eine radiale Stauchung der Dichtungslippen 53, 54 bezogen Vorspannung von 20% bis 30% an den Dichtungsflächen 26 anliegt.

Es werden hier zwei Ausführungsformen des Kunststoffeckventils 1 beschrieben, wobei bei beiden Ausführungsformen vorgesehen ist, dass die Absperrung in einer zur Drehachse d parallelen Montagerichtung m seitlich in die innere Aufnahme 4 eingebracht angeordnet ist. Was den Figuren wegen der geringen Geometriewerte kaum entnehmbar ist, dass der Absperrkörper bei der Herstellung zu seiner leichteren Entformbarkeit in Montagerichtung leicht konisch zulaufend ausgebildet ist.

Wie ferner Figur 4b mit der Absperrung 3 in der Absperrposition entnehmbar, ist der um 90° abgewinkelten Kanalabschnitt 35 zu dem Eingangskanal 21 hin geöffnet, aber an seiner anderen Seite innenseitig durch den Ventilhauptköper 2 verschlossen. Es steht also der Flüssigkeitsdruck als Staudruck an der Innenwandung des Kanalabschnitts 35 an. Damit wird auch die Stelle mit der von der Wandung her relativ geringen radialen Dicke mit der hinteren axialen Dichtlippe 53 durch den Staudruck belastet. Hierdurch kann der Kanalabschnitts 35, abhängig von der Werkstoffpaarung in dem Kunststoffeckventil 1, in angegebener Richtung x geringfügig, beispielsweise um weniger als zwei Zentelmillimeter, elastisch aufgeweitet werden, wodurch die hintere axiale Dichtlippe 53 stärker und damit stärker dichtend gegen die zugeordnete Dichtungsfläche 26 in der Aufnahme 4 gedrückt zu werden.

Ferner ist die in den Ventilhauptkörper 2 eingebrachte Absenkung 24 zur leichteren Entformbarkeit des Ventilhauptkörpers 2 seitlich gegen Montagerichtung m so geöffnet ausgebildet, dass keine gegen Montagerichtung m wirksame Hintergriffigkeit an dieser Stelle existiert. Wie in Figur 6 gezeigt, weist die Absenkung 24 in den hier gezeigten Ausführungsformen des Kunststoffeckventils ein U-förmiges Öffnungsprofil mit zwei vorzugsweise gleichen Schenkeln 27 parallel zur Drehachse d und einer die Schenkel 27 verbindenden Grundseite 28 senkrecht zur Drehachse d auf. Die in Montagerichtung m vordere Seite 29 ist gegenüber den Schenkeln 27 und der Grundseite 28 abgesenkt angeordnet.

Da die Absenkung von den Dichtungsflächen 26 seitlich definiert bzw. begrenzt wird, hat die Absenkung der vorderen Seite 29 konstruktiv zur Folge, dass damit ebenfalls die Dichtungsfläche 26 für die in Montagerichtung m vordere umfängliche Dichtungslippe 54 entsprechend abgesenkt ist. Daher erstreckt sich die vordere umfängliche Dichtungslippe 54 um den Betrag der Tiefe t der Absenkung 24 weiter radial nach Außen als die die in Montagerichtung m hintere umfängliche Dichtungslippe 54. Beide umfänglichen Dichtlippen 54 werden jedoch beim Verdrehen der Absperrung 3 nicht über den Öffnungsrand 23 der Einmündung des Ausgangskanals 22 geführt, so dass dieses ohne Dichtungsverlust oder Verminderung der Standfestigkeit des Kunststoffeckventils 1 möglich ist.

Der Absperrkörper weist bezüglich der Drehachse d einen als Betätigungsende 361 ausgebildeten ersten Endbereich und einen als Halteende 362 ausgebildeten zweiten Endbereich zur Sicherung des Absperrköpers 31 gegen ein Herausdrücken gegen Montagerichtung auf. Bezüglich der Montagerichtung ist hier der hier ist der erste Endbereich vorn und der zweite Endbereich hinten angeordnet.

An dem Betätigungsende 361 sind zwei zur Drehachse d einander gegenüber liegende radiale Hebel 37 zur manuellen Verdrehung der Absperrung 3 zwischen den Positionen vorgesehen. Zur Begrenzung der Verdrehung aus der Offenposition in die Sperrposition und umgekehrt entsprechend dem in seinem Verlauf um 90° abgewinkelten Kanalabschnitt 35 jeweils um 90° sind an dem Ventilhauptköper 2 entsprechende Anschläge 211 vorgesehen, gegen die die radialen Hebel 37 umfänglich geführt werden. Ferner ist die Lage des abgewinkelten Verlaufs des Kanalabschnitts 35 stirnseitig des ersten Endbereichs bildhaft angedeutet.

An dem Halteende 362 sind Haltemittel hier in Form von Rasthaken 38 vorgesehen, die in Montagelage eine an dem Ventilhauptkörper 2 vorgesehene stirnseitige Öffnung 212 verrastend so durchgreifen, dass die Absperrung 3 verdrehbar, aber axial verschiebungsfest in der Aufnahme 4 gehalten ist.

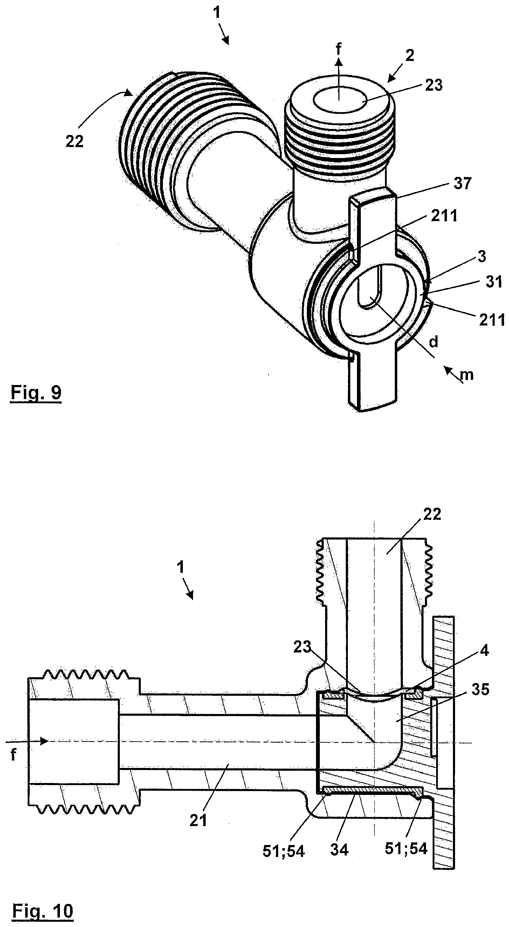

In den Figuren 9 und 10 ist eine weitere Ausführungsform des Kunststoffeckventils 1 gezeigt, bei dem die Absperrung 3 nicht, wie bei der ersten Ausführungsform gemäß den Figuren 1-8, senkrecht zu den beiden Kanälen 21,22 sondern senkrecht zu dem Ausgangskanal 22 und in axialer Richtung des Eingangskanal 21 in die Aufnahme 4 hineinmontiert wird. Hierbei ist Drehachse d der Absperrung 3 parallel zur Längsachse des Eingangskanals 21 angeordnet. Bis zusätzlich auf die axiale Festlegung und drehbaren Lagerung des Absperrkörpers 31 an seinem hinteren Endbereich 362 sind die übrigen Merkmale der 2. Ausführungsform des Kunststoffeckventils 1 gleich denen der 1. Ausführungsform des Kunststoffeckventils 1.

### Bezugszeichenliste

- 1: Kunststoffeckventil
- 2: Ventilhauptkörper
- 21: Eingangskanal
- 22: Ausgangskanal
- 23: Öffnungsrand
- 24: Absenkung
- 25: Seitenfläche
- 26: Dichtungsflächen
- 27: Schenkel
- 28: Grundseite
- 29: Seite
- 211: Anschlag
- 212: Öffnung
- 3: Absperrung
- 31: Absperrkörper
- 32: Abschnitt
- 34: Schicht
- 35: Kanalabschnitt
- 361: Betätigungsende
- 362: Halteende
- 37: Hebel
- 38: Rasthaken
- 4: Aufnahme
- 5: Dichtung
- 51: Erhebung
- 52: Dichtungsabschnitt
- 53: axiale Dichtlippe
- 54: umfängliche Dichtlippe
- d: Drehachse
- f: Durchflussrichtung
- m: Montagerichtung
- ö: Öffnungsachse
- r: Drehrichtung
- u: Umfangsrichtung
- x: Richtung

## Patentansprüche

1. Kunststoffeckventil (1) zur Absperrung oder Regelung des Durchflusses von Flüssigkeiten, aufweisend einen Ventilhauptkörper (2) mit einem Eingangskanal (21) und einem Ausgangskanal (22), wobei die beiden Kanäle (21, 22) in einem rechtem oder zumindest etwa rechtem Winkel zueinander angeordnet sind und jeweils in eine innere Aufnahme (4) mit einer darin um eine Drehachse (d) senkrecht oder etwa senkrecht zum Ausgangskanal (22) drehbar gelagerten und mittels einer Dichtung (5) gegen den Ventilhauptkörper (2) abgedichteten Absperrung (3) einmünden und wobei die Absperrung (3) in einer Offenposition die beiden Kanäle (21, 22) miteinander verbindet und in einer Sperrposition die beiden Kanäle (21, 22) voneinander trennt, **dadurch gekennzeichnet, dass** die Dichtung (5) eine radial nach Außen vorstehende elastomere Erhebung (51) aufweist, die in der Sperrposition den Öffnungsrand (23) des in die Aufnahme (4) einmündenden Ausgangskanals (22) bezüglich der Öffnungsachse (ö) des Öffnungsrandes (23) vollumfänglich umgebend dichtend gegen den Ventilhauptköper (2) anliegt und dass die elastomere Erhebung (51) bei der Drehung der Absperrung (3) zwischen der Offenposition und der Sperrposition radial nach Innen beabstandet zu dem Öffnungsrand (23) des Ausgangskanals (22) angeordnet über denselben führbar ist.

2. Kunststoffeckventil nach Anspruch 1, **dadurch gekennzeichnet, das s** die innere Aufnahme (4) im Bereich der Einmündung des Ausgangskanals (22) in die Aufnahme (4) eine bezüglich der Drehachse (d) radial nach Außen gehende Absenkung (24) mit insbesondere in Durchflussrichtung (f) konisch zulaufenden und/oder gerundeten Seitenflächen (25) aufweist, wobei die Absenkung (24) randseitig von radial nach Innen weisenden Dichtungsflächen (26) für die elastomere Erhebung (51) definiert wird und der Ausgangskanal (22) in die Absenkung (24) einmündet.

3. Kunststoffeckventil nach einem der vorhergehenden Ansprüchen, **dadurch gekennzeichnet, das s** die radiale Höhe (h) der elastomeren Erhebung (51) kleiner als die radiale Tiefe (t) der Absenkung (24) ist.

4. Kunststoffeckventil nach einem der vorhergehenden Ansprüchen, **dadurch gekennzeichnet, das s** die radiale Höhe () der elastomeren Erhebung (51) so bemessen ist, dass sie bei Abdichtung unter einer Vorspannung von 5% bis 50%, vorzugsweise von 15% bis 30% und idealerweise von 20% bis 30% an dem Ventilhauptkörper (2) anliegt.

5. Kunststoffeckventil nach einem der vorhergehenden Ansprüchen, **dadurch gekennzeichnet, dass** die elastomere Erhebung (51) zumindest eine radial nach außen weisende Dichtlippe () aufweist.

6. Kunststoffeckventil nach einem der vorhergehenden Ansprüche, **dadurch gekennzeichnet, dass** die elastomere Erhebung (51) vier Dichtungsabschnitte (52) aufweist, die, vorzugsweise jeweils senkrecht aneinander anschließend, die Absenkung (24) in der Sperrposition umfänglich umschließend angeordnet sind.

7. Kunststoffeckventil nach Anspruch 6, **dadurch gekennzeichnet, dass** zwei erste Dichtungsabschnitte (52) in Richtung der Drehachse (d) und zwei zweite Dichtungsabschnitte (52) senkrecht zur Drehachse (d) angeordnet sind.

8. Kunststoffeckventil nach einem der vorhergehenden Ansprüche, **dadurch gekennzeichnet, dass** die elastomere Erhebung (51) zwei in Umfangsrichtung (u) parallel beabstandete axiale Dichtlippen (53) aufweist, die in der Sperrfunktion in Umfangsrichtung (u) beidseitig der Absenkung (24) dichtend an der jeweils zugeordnete Dichtungsfläche (26) anliegend angeordnet sind, und zwei axial parallel beabstandete umfängliche Dichtlippen (52) oder zwei umfängliche axial parallel beabstandete O-Ringe aufweist, die in der Sperrfunktion in axialer Richtung beidseitig der Absenkung (24) dichtend an der jeweils zugeordnete Dichtungsfläche (26) anliegend angeordnet sind.

9. Kunststoffeckventil nach einem der vorhergehenden Ansprüche, **dadurch gekennzeichnet, dass** die Absperrung (3) zur Erstellung der Dichtung (5) mit dem Elastomer umspritzt ausgebildet ist.

10. Kunststoffeckventil nach einem der vorhergehenden Ansprüche, **dadurch gekennzeichnet, dass** die Absperrung (3) einen bezüglich seiner Grundform zylindrischen Absperrkörper (31) mit einem die Dichtung (5) aufweisenden axialen Abschnitt (32) aufweist, wobei der axiale Abschnitt (32) mit dem Elastomer umspritzt oder vollständig aus dem Elastomer gefertigt ausgebildet ist.

11. Kunststoffeckventil nach Anspruch 10, **dadurch gekennzeichnet , dass** der Absperrkörper (31) in dem axialen Abschnitt (32) einen Kern aus Kunststoff, insbesondere aus Duroplast oder Thermoplast, aufweist, der mit einer Schicht (34) aus dem Elastomer ummantelt ist, wobei sich die elastomere Erhebung (51) von der Schicht (34) radial nach außen erstreckt.

12. Kunststoffeckventil nach einem der vorhergehenden Ansprüche, **dadurch gekennzeichnet, dass** es genau aus zwei Bauteilen, das heißt dem Ventilhauptkörper (2) und der Absperrung (3), aufgebaut ist.

13. Kunststoffeckventil nach einem der vorhergehenden Ansprüche, **dadurch gekennzeichnet, dass** die Absperrung (3) in einer zur Drehachse (d) parallelen Montagerichtung (m) seitlich in die innere Aufnahme (4) eingebracht angeordnet ist, wobei die in den Ventilhauptkörper (2) eingebrachte Absenkung (24) zur leichteren Entformbarkeit des Ventilhauptkörpers (2) seitlich gegen Montagerichtung (m) geöffnet ausgebildet ist.

14. Kunststoffeckventil nach Anspruch 13, **dadurch gekennzeichnet, dass** die Absenkung (24) ein U-förmigen Öffnungsprofil mit zwei vorzugsweise gleichen Schenkeln (27) parallel zur Drehachse (d) und einer die Schenkel (27) verbindenden Grundseite (28) senkrecht zur Drehachse (d) aufweist.

15. Kunststoffeckventil nach einem der Ansprüche 10 bis 14, **dadurch gekennzeichnet, dass** der Absperrkörper (31) bezüglich der Drehachse (d) einen als Betätigungsende (361) ausgebildeten ersten Endbereich und einen als Halteende (362) ausgebildeten zweiten Endbereich zur Sicherung des Absperrköpers (31) gegen eine Herausdrücken gegen Montagerichtung (m) aufweist.

## Claims

1. Plastic angle valve (1) for closing off or regulating the flow of liquids which has a valve main body (2) with an input channel (21) and an output channel (22), wherein both channels (21, 22) are placed at a right angle or at least at an approximately right angle to each other and open to an internal seat (4) with a shut-off (3) supported therein rotatable about an axis of rotation (d) perpendicularly or approximately perpendicularly to the output channel (22) and sealed against the valve main body (2) by means of a gasket (5) and wherein the shut-off (3) connects both channels (21, 22) with each other in an open position and separates both channels (21, 22) from each other in a blocking position, **characterized in that** the gasket (5) has a radially outwards protruding elastomeric elevation (51) that, in the blocking position, sealingly bears against the valve main body (2) by fully surrounding the opening edge (23) of the outlet channel (22) that opens into the seat (4) with respect to the opening axis (ö) of the opening edge (23) and that the elastomeric elevation (51), when the shut-off rotates between the open position and the blocking position, can be guided over the opening edge (23) of the outlet channel (22) by being placed radially spaced inwards thereto.

2. Plastic angle valve according to claim 1, **characterized in that** the inner seat (4) has a depression (24) that is oriented radially outwards with respect to the axis of rotation (d) with tapered side faces (25) in particular in the flow direction (f) and/or rounded side faces in the area of the junction of the output channel (22) into the seat (4), wherein the depression (24) is defined on the edges by radially inwards oriented sealing surfaces (26) for the elastomeric elevation (51) and the output channel (22) runs into the depression (24).

3. Plastic angle valve according to one of the preceding claims, **characterized in that** the radial height (h) of the elastomeric elevation (51) is lower than the radial depth (t) of the depression (24).

4. Plastic angle valve according to one of the preceding claims, **characterized in that** the radial height (h) of the elastomeric elevation (51) is so dimensioned that, when sealing, it bears on the valve main body (2) with a preload of 5% to 50%, preferably of 15% to 30% and ideally of 20% to 30%.

5. Plastic angle valve according to one of the preceding claims, **characterized in that** the elastomeric elevation (51) has at least one radially outwards oriented sealing lip ().

6. Plastic angle valve according to one of the preceding claims, **characterized in that** the elastomeric elevation (51) has four sealing portions (52) that are placed preferably following each other perpendicularly that circumferentially surround the depression (24) in the blocking position.

7. Plastic angle valve according to claim 6, **characterized in that** two first sealing portions (52) are placed in direction of the axis of rotation (d) and two second sealing portions (52) perpendicularly to the axis of rotation (d).

8. Plastic angle valve according to one of the preceding claims, **characterized in that** the elastomeric elevation (51) has two axial sealing lips (53) that are spaced in parallel in the circumferential direction (u) that are placed, in the blocking function, sealingly bearing on the sealing surface (26) respectively associated thereto on both sides of the depression (24) or two O-rings axially spaced in parallel in the circumferential direction that are placed, in the blocking function, sealingly bearing on the sealing surface (26) respectively associated thereto in axial direction on both sides of the depression (24).

9. Plastic angle valve according to one of the preceding claims, **characterized in that** the shut-off (3) is configured extrusion-coated with the elastomer for producing the gasket (5).

10. Plastic angle valve according to one of the preceding claims, **characterized in that** the shut-off (3) has a shut-off body (31) with a cylindrical base form with an axial portion (32) that has the gasket (5), wherein the axial portion (32) is configured extrusion-coated with the elastomer or fully made of the elastomer.

11. Plastic angle valve according to claim 10, **characterized in that** the shut-off body (31) has a core made of plastic, in particular of thermosetting plastic or thermoplastic, in the axial portion (32), the core being enclosed in a layer (34) of elastomer, wherein the elastomeric elevation (51) extends radially outwards from the layer (34).

12. Plastic angle valve according to one of the preceding claims, **characterized in that** it is made specifically of two components, i.e. the valve main body (2) and the shut-off (3).

13. Plastic angle valve according to one of the preceding claims, **characterized in that** the shut-off (3) is placed laterally mounted in the internal seat (4) in a mounting direction (m) parallel to the axis of rotation (d), wherein the depression (24) incorporated into the valve main body (2) is configured open laterally against the mounting direction (m) for an easier deformability of the valve main body (2).

14. Plastic angle valve according to claim 13, **characterized in that** the depression (24) has a U-shaped opening profile with two preferably same legs (27) parallel to the axis of rotation (d) and a base side (28) that connects the legs (27) perpendicularly to the axis of rotation (d).

15. Plastic angle valve according to one of the claims 10 to 14, **characterized in that** the shut-off body (31) has a first end area configured as an actuation end (361) with respect to the axis of rotation (d) and a second end area configured as a retaining end (362) for securing the shut-off body (31) against pushing out against the mounting direction (m).

## Revendications

1. Robinet d'équerre en plastique (1) pour obturer ou régler le passage de liquides qui présente un corps principal de vanne (2) avec un canal d'entrée (21) et un canal de sortie (22), les deux canaux (21, 22) étant placés à angle droit ou en formant un angle au moins approximativement droit l'un par rapport à l'autre et débouchant chacun dans un logement intérieur (4) avec un obturateur (3) qui y est positionné rotatif autour un axe de rotation (d) perpendiculaire à ou à peu près perpendiculaire au canal de sortie (22) et qui est rendu étanche par rapport au corps principal de vanne (2) au moyen d'un joint (5) et l'obturateur (3) reliant les deux canaux (21, 22) l'un à l'autre dans une position ouverte et séparant les deux canaux (21, 22) l'un de l'autre dans une position de blocage, **caractérisé en ce que** le joint (5) présente un rehaussement en élastomère (51) qui fait saillie radialement vers l'extérieur qui, dans la position d'obturation, s'appuie contre le corps principal de vanne (2) en rendant étanche le bord de l'ouverture (23) du canal de sortie (22) qui débouche dans le logement (4) en l'entourant sur toute sa circonférence par rapport à l'axe d'ouverture (ö) du bord de l'ouverture (23) et que le rehaussement en élastomère (51) peut être guidé, lors de la rotation de l'obturateur (3) entre la position ouverte et la position de blocage, en étant placé espacé radialement vers l'intérieur du bord de l'ouverture (23) du canal de sortie (22), sur celui-ci.

2. Robinet d'équerre en plastique selon la revendication 1, **caractérisé en ce que** le logement intérieur (4) présente, dans la zone de l'embouchure du canal de sortie (22) dans le logement (4), un affaissement (24) qui va radialement vers l'extérieur par rapport à l'axe de rotation (d) avec des faces latérales (25) en particulier effilées dans le sens du débit (f) et/ou arrondies, l'affaissement (24) définissant au niveau des bords des surfaces d'étanchéité (26) orientées radialement vers l'intérieur pour le rehaussement en élastomère (51) et le canal de sortie (22) débouchant dans l'affaissement (24).

3. Robinet d'équerre en plastique selon l'une des revendications précédentes, **caractérisé en ce que** la hauteur radiale (h) du rehaussement en élastomère (51) est inférieure à la profondeur radiale (t) de l'affaissement (24).

4. Robinet d'équerre en plastique selon l'une des revendications précédentes, **caractérisé en ce que** la hauteur radiale (h) du rehaussement en élastomère (51) est dimensionnée telle qu'il s'appuie, lors de l'étanchéité, sur le corps principal de vanne (2) avec une précontrainte de 5% à 50%, de préférence de 15% à 30% et de manière idéale de 20% à, 30%.

5. Robinet d'équerre en plastique selon l'une des revendications précédentes, **caractérisé en ce que** le rehaussement en élastomère (51) présente au moins une lèvre d'étanchéité () orientée radialement vers l'extérieur.

6. Robinet d'équerre en plastique selon l'une des revendications précédentes, **caractérisé en ce que** le rehaussement en élastomère (51) présente quatre portions d'étanchéité (52) qui sont placées de préférence en se suivant perpendiculairement l'une l'autre en entourant l'affaissement (24) sur sa circonférence dans la position de blocage.

7. Robinet d'équerre en plastique selon la revendication 6, **caractérisé en ce que** le rehaussement en élastomère (51) présente deux premières portions d'étanchéité (52) en direction de l'axe de rotation (d) et deux secondes portions d'étanchéité (52) perpendiculairement à l'axe de rotation (d).

8. Robinet d'équerre en plastique selon l'une des revendications précédentes, **caractérisé en ce que** le rehaussement en élastomère (51) présente deux lèvres d'étanchéité axiales (53) espacées parallèlement dans le sens de la circonférence (u) qui sont placées, dans la fonction de blocage, attenantes de manière étanche à la surface d'étanchéité respectivement associée (26) dans le sens de la circonférence (u) des deux côtés de l'affaissement (24) et deux lèvres d'étanchéité périphériques (52) espacées parallèlement dans le sens axial ou deux joints toriques périphériques espacés parallèlement dans le sens axial qui sont placés, dans la fonction de blocage, dans le sens axial des deux côtés de l'affaissement (24) en étant attenants de manière étanche à la surface d'étanchéité respectivement associée (26).

9. Robinet d'équerre en plastique selon l'une des revendications précédentes, **caractérisé en ce que** l'obturateur (3) est configuré surmoulé par l'élastomère pour réaliser le joint (5).

10. Robinet d'équerre en plastique selon l'une des revendications précédentes, **caractérisé en ce que** l'obturateur (3) présente un corps d'obturateur de forme de base cylindrique (31) avec une portion axiale (32) qui présente le joint (5), cependant que la portion axiale (32) est configurée surmoulée par l'élastomère ou entièrement fabriquée en élastomère.

11. Robinet d'équerre selon la revendication 10, **caractérisé en ce que** le corps d'obturateur (31) présente, dans la portion axiale (32), un noyau de plastique, en particulier en matière thermodurcissable ou thermoplastique qui est enrobé d'une couche (34) d'élastomère, cependant que le rehaussement en élastomère (51) s'étend radialement vers l'extérieur à partir de la couche (34).

12. Robinet d'équerre en plastique selon l'une des revendications précédentes, **caractérisé en ce qu'**il est constitué exactement par deux composants, c'est-à-dire le corps principal de vanne (2) et l'obturateur (3).

13. Robinet d'équerre en plastique selon l'une des revendications précédentes, **caractérisé en ce que** l'obturateur (3) est placé monté dans le logement intérieur (4) latéralement dans un sens de montage (m) parallèle à l'axe de rotation (d), cependant que l'affaissement (24) ménagé dans le corps principal de vanne (2) est configuré ouvert pour une déformabilité plus aisée du corps principal de vanne (2) latéralement à l'encontre du sens de montage (m).

14. Robinet d'équerre en plastique selon la revendication 13, **caractérisé en ce que** l'affaissement (24) présente un profil d'ouverture en forme de U avec deux montants (27) de préférence égaux parallèlement à l'axe de rotation (d) et un côté de base (28) qui relie les montants (27) perpendiculairement à l'axe de rotation (d).

15. Robinet d'équerre en plastique selon l'une des revendications 10 à 14, **caractérisé en ce que** le corps d'obturateur (31) présente une première zone d'extrémité configurée comme extrémité d'actionnement (361) par rapport à l'axe de rotation (d) et une seconde zone d'extrémité configurée comme extrémité de retenue (362) pour sécuriser le corps d'obturateur (31) pour qu'il ne soit pas repoussé à l'encontre du sens de montage (m).
